# EUROPEAN PATENT SPECIFICATION

(11) **EP 1 627 457 B1**
(45) Date of publication and mention of the grant of the patent: **26.11.2014**
(21) Application number: 03817109.6
(22) Date of filing: 27.05.2003
(51) Int. Cl.: H02K 1/27, H02K 7/102, H02K 16/00, H02K 21/12

(54) **MODULAR TRANSVERSE FLUX MOTOR WITH INTEGRATED BRAKE**
MODULARER TRANSVERSALFLUSSMOTOR MIT INTEGRIERTER BREMSE
MOTEUR A FLUX TRANSVERSAL MODULAIRE A FREIN INTEGRE

(43) Date of publication of application: 22.02.2006
(73) Proprietor: Otis Elevator Company, Farmington, CT 06032 (US)
(72) Inventor: GIERAS, Jacek, Glastonbury, CT 06033 (US); LIU, Kitty, Waterbury, CT 06705 (US); MILLER, Robin, Canton, Connecticut 06019 (US); WAGNER, Paul, Norfolk, CT 06058 (US)
(74) Representative: Ramsay, Laura Anne
(86) International application number: PCT/US2003/017057
(87) International publication number: WO 2004/107530

(56) References cited:
- EP-A2- 0 361 925
- US-A- 2 006 172
- US-A- 4 019 406
- US-A- 4 529 902
- US-A- 5 365 137
- US-A- 6 043 579

## Description

This invention relates to transverse flux motors in which the output torque can be adjusted by stacking rotor/stator modules to fit the needs of applications, such as elevators. The transverse flux rotor/stator modules have an integrated brake.

As an example of art needful of the present invention, elevator machines represent a major portion of the material costs of an elevator. Elevator machines require slow rotating speeds and must provide decades of maintenance-free service. For low noise, smooth operation, low cost, and a compact drive system, gearing is to be avoided if possible. One important factor in motor selection is the amount of torque output per unit of active material, either mass or volume, including the core steel, the conductor wire, and the permanent magnets. Maximum torque requirements for an elevator machine are determined by the maximum imbalance, which is generally about one-half of rated load plus maximum cable mass mismatch, together with the sheave diameter and roping arrangement (1:1, 2:1, etc.).

Conventional, rotating field electric machines have phase windings integrated into one core structure. US 6,043,579 discloses a transverse flux machine that is permanently excited with prefabricated parts. For larger torque capability, a longer core of stacked laminations is required, with different phase windings, which in turn require different winding fixtures and other manufacturing equipment. The stator of conventional motors have end turns which extend beyond the useful flux-producing portion of the motor. These coil extensions render it difficult to achieve compact motor/sheave combinations, and to integrate brakes or other auxiliary structures with the motors.

To reduce the number of motor models required for a product line, some of the elevator models that share a motor type with other elevator models are oversized for their torque requirements. Having a large number of motors without common parts raises the cost of materials, set-up, manufacture, and warehousing spare parts.

Objects of the invention include: improved motors for elevators; motors that provide high torque at low speed: motors in which torque can be increased simply by adding modular phases; motors in which the torque can be increased without requiring a total change of the windings; motors with high efficiency and good power factor; motors which have a high volumetric torque density; motors with relatively shorter assemblies with no coil end turns, and thus lower loses; motors having simple stator windings; motors which use significantly less copper and require less manufacturing labor than similarly rated permanent magnet brushless motors; and motors which can be built with identical modules to permit small steps in torque ratings using identical parts.

According to the present invention, there is provided a modular rotary machine according to claim 1 and a method of providing a machine according to claim 7. An electric motor, suitable for driving elevator sheaves, consists of rotor/stator modules, one module per phase of the driving current, the motors being built up of identical rotor/stator modules, one or more modules per phase, in order to select the proper torque rating of the motor.

A brake is disposed integrally, on the same shaft and contiguous to a rotor/stator module of a transverse flux motor.

A motor according to embodiments of the present invention provides higher torque per unit volume than a conventional motor, has practically constant efficiency for constant stator torque and speed, has improved power factor (due to the absence of end-turn leakage flux), and is capable of a power factor which increases with the number of poles. A motor according to embodiments of the invention has practically constant efficiency in ranges from about 50% to about 120% of the rated shaft torque at rated operating speed. The motor has shorter ferromagnetic core and shaft and utilizes 30% less copper in conductors and ferromagnetic core volume than comparable permanent magnet brushless motors, and has no coil end turns, thus producing a shorter, lighter motor. The embodiments provide motors having only a single, annular coil per phase regardless of the number of poles.

Other objects, features and advantages of the present invention will become more apparent in the light of the following detailed description of exemplary embodiments thereof, as illustrated in the accompanying drawings.

### Brief Description of the Drawings

Fig. 1 is a external perspective view of a motor according to the invention as it may attach to the sheave of an elevator.
Fig. 2 is an exploded perspective view of a three-phase motor and integral brake according to the present invention.
Fig. 3 is a perspective view of an assembled rotoristator module.
Fig. 4 is an exploded perspective view of the module of Fig. 3.
Fig. 5 is a sectioned elevation taken on the line 5-5 of Fig. 3.
Fig. 6 is a partial perspective view of the interface between the rotor and the stator of a rotor/stator module.
Fig. 7 is a partial, expanded elevation of the section of Fig. 5.
Fig. 8 is a sectioned elevation of the motor and integrated brake illustrated in Figs. 1. 7.
Fig. 9 is a partial expanded view of the integrated brake shown in Fig. 8 with the brake released.
Fig. 10 is an expanded view of the integrated brake of Fig. 8 with the brake engaged.
Figs. 11 and 12 are simplified side sectional views illustrating modularity of the present invention.
Fig. 13 is a macro function diagram of a method of modular motor manufacture.

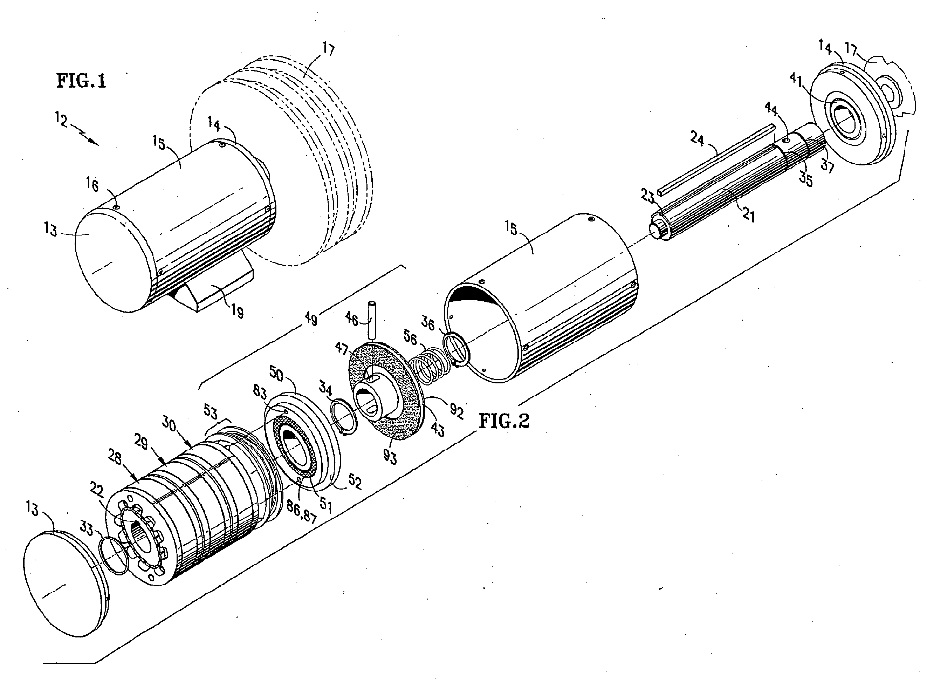

Referring to Fig. 1, a motor 12 with integral brake according to an embodiment of the present invention includes a left end plate 13 and a right end plate 14 which are secured to an enclosure 15 by suitable fasteners, such as radial screws 16 in low torque applications. In large motors, the endplates may be secured with axial bolts threaded into a thicker enclosure. The motor rotates a driven member which, for instance, may be an elevator sheave 17. The motor enclosure has a mounting base 19. The enclosure 15 is omitted in Fig. 2 for clarity.

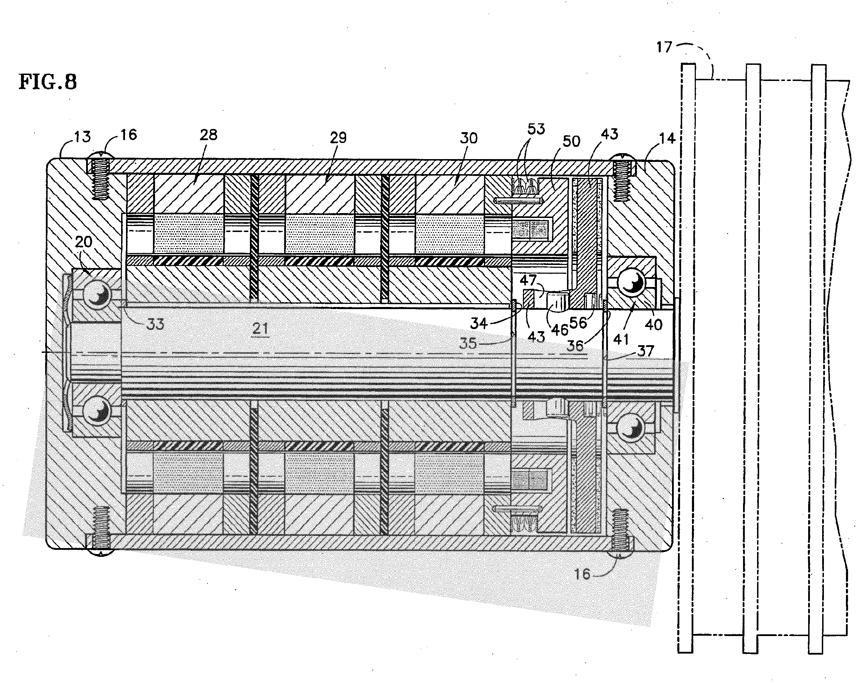

Referring to Fig. 2, the end plates 13, 14 have bearings therein, only the bearing 41 for the right end plate being shown in Fig. 2. Although not shown herein, the bearings may have covers to aid in lubrication and prevent ingress of dirt, as is known. A shaft 21 has a slot 23 to receive a key 24 which engages a plurality of rotor/stator modules 28-30, each of which has a corresponding slot 22 in its rotor so as to transfer torque from the rotor to the shaft. A spacer 33 (also see Fig. 8) prevents the rotor of module 28 from engaging the outer race of the bearing 20. A spring clip 34 in a notch 35 in the shaft 21 engages the rotor of module 30, preventing relative axial movement between the modules 28-30 and the shaft 21, thereby holding the modules 28-30 contiguous with each other and in contact with the spacer 33. Similarly, to prevent rightward movement of the shaft 21, a spring clip 36 in a notch 37 (see also Fig. 8) contacts the inner race 40 of a bearing 41 on the right end of the shaft, shown only in Figs. 8-10.

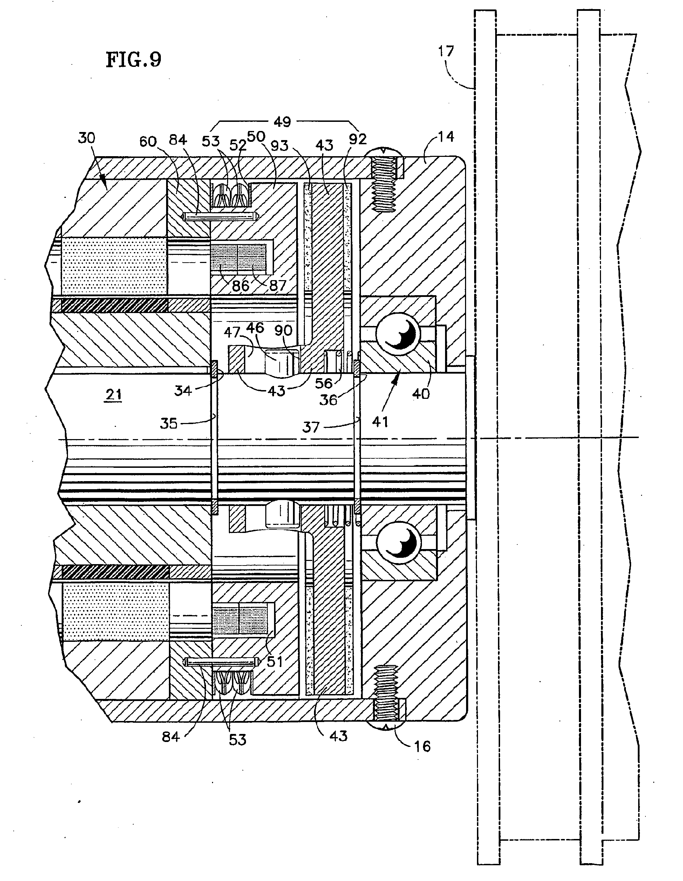

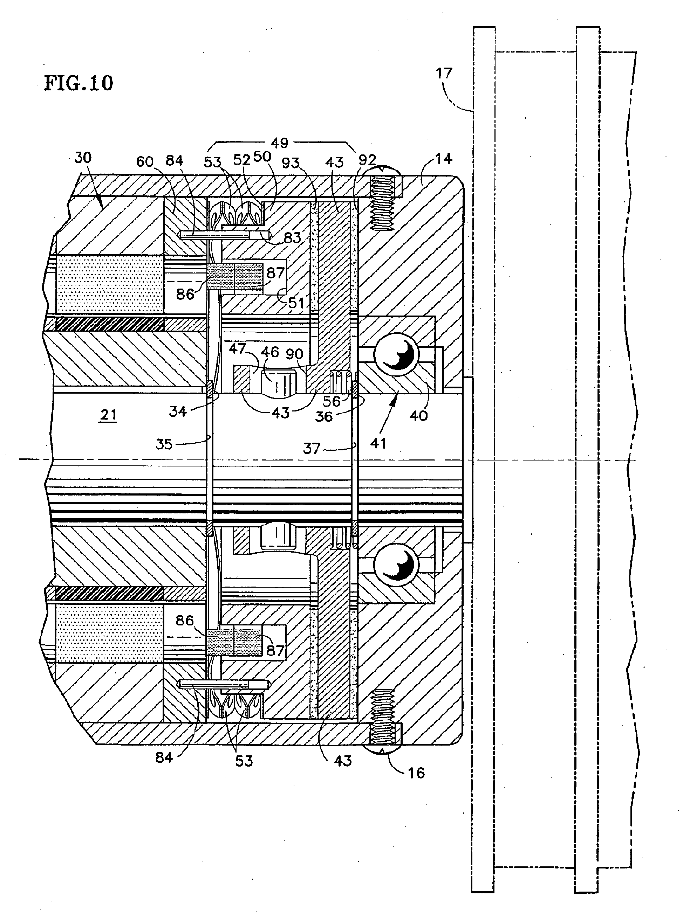

A brake disc 43 is engaged to a hole 44 in the shaft 21 by a pin 46 on which the disc 43 may slide through an elongated slot 47. A brake assembly 49 includes an annular frame 50 having an annular groove 51 for brake releasing coils, and a land 52 against which stacked wave springs 53 will press so as to engage the brake when the brake releasing coil is disenergized. A return spring 56 will cause the brake disc to assume a neutral position where it will neither contact the right end plate 14 nor the frame 50 when the brake releasing coil is energized. This is described in detail hereinafter with respect to Figs. 9 and 10.

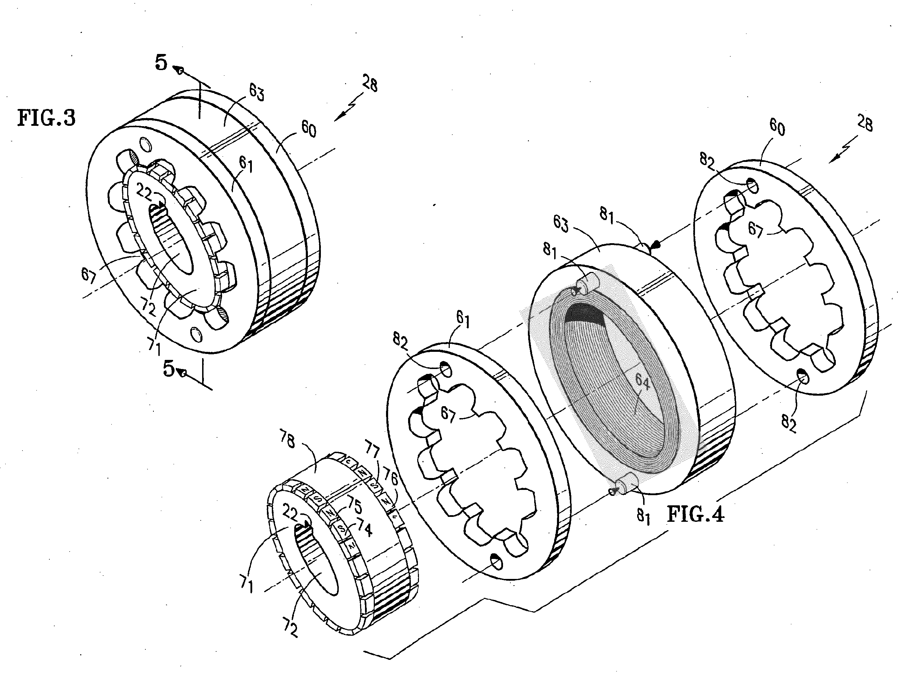

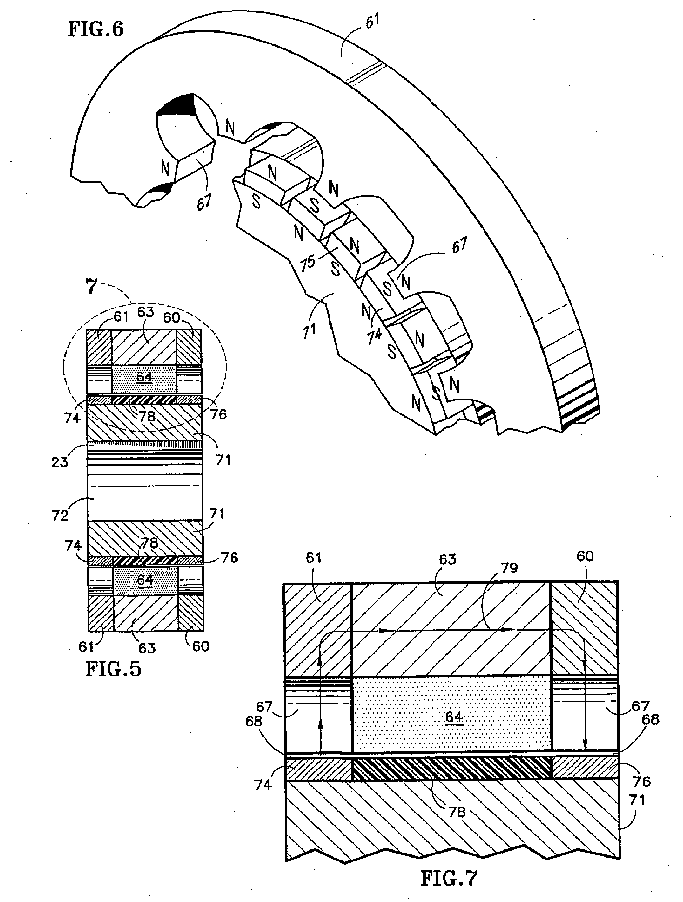

Referring to Figs. 3-7, each rotor/stator module includes a pair of soft magnetic stator plates 60, 61 separated by a soft magnetic annulus 63 that contains an annular coil 64. The stators 60, 61 have oppositely-poled poles, shown in Fig. 6 to be north poles on stator plate 61 (there concurrently are south poles on stator plate 60), but the polarity alternates with the current in the coil 64. The poles 67 are separated by air gaps 68.

The rotor of each rotor/stator module 28-30 consists of an annular soft magnetic base portion 71 with a hole 72 for the shaft 21. On the surface of the base portion 71, two rows of hard permanent magnets 74-77, which may be NdFeB, are separated by a non-magnetic spacer 78 (but there could be air between the two rows of magnets 74-77). The south pole 74 in one row of magnets is in axial alignment with a north pole 76 in the other row of magnets, and the north pole 75 in the one row of magnets is in axial alignment with a south pole 77 in the other row of magnets. Thus, for each pole 67 there are a pair of magnets 74, 75. Alternative configurations may have variations in magnet placement, size, shape and consistency. The requirement is to have an alternating field, multiple magnets, or multi-poled segments. The magnets 75-77 are shown in Figs. 4 and 6 as being spaced from adjacent magnets; however, they may be toughing. In fact, they may comprise a solid ring of magnetic material or an extension of the magnetic material of the base 71 which is polarized to provide the appropriate polarization. The base portion 71 has polarities created therein, as illustrated in Fig. 6, which are opposite to the air gap polarity of each of the magnets 74-77 and provides an effective return path for the magnetic fields.

Referring to Fig. 7, the flux path illustrated by an arrow 79 reverses with current. Pins 81 (Fig. 4) press fit into the annulus 63 engage holes 82 in the stator plates 60, 61 to maintain module alignment.

Referring to Figs. 9 and 10, the frame 50 of the disc brake 49 includes a pair of alignment holes 83 (Fig. 10) within which alignment pins 84 are free to slide, the pins 84 being press fit within holes in the stator 60 of the rotor/stator module 30. This keys the frame to a stationary part of the motor to prevent the disc brake assembly 50 from rotating against the force of the brake disc 43 when the brake is applied. Alternatively, the frame may be keyed to any suitable stationary part of the motor, such as the enclosure 15. A pair of brake coils 86, 87 are disposed in and adjacent to the groove 51. Each coil has sufficient strength so as to release the brake, the two coils both being provided for redundant safety. A shoulder 90 (Fig. 9) engages the pin 46 when the brake is released so that the return spring 56 will move the brake disc 43 away from the end plate 14 while the pin 46 acting on the shoulder 90 (Fig. 9) will prevent the spring 56 from causing the brake disc 43 to drag on the disc brake assembly 50.

The wave springs 53 may be of such size and number as is determined necessary to provide the desired brake torque. They may for instance comprise crest-to-crest springs as shown in the web site www.smalley.com/spring and provided by the Smalley Steel Ring Company of Lake Zurich. IL, USA.

As seen in Fig. 10, a brake friction pad 92 on the brake disc will engage the end plate 14 of the motor when the brake is operated by the springs 53 with the coils 86, 87 not energize. Similarly, a brake friction pad 93 will engage the frame 50, which in turn is anchored to the stator 60 by the pins 84, when the brake is engaged as shown in Fig. 10. Thus, the brake is integral with the motor assembly, reducing the space, mass and parts count, and thereby providing a more efficient and economical unit.

Instead of using the rotoristator arrangement described with respect to Figs. 1-7 herein, embodiments of the present invention may be implemented utilizing transverse flux permanent magnet machines employing a variety of topographies, such as those disclosed in Harris, M.R., "Comparison of Flux-Concentrated and Surface Magnet Configurations of the VRPM (Transverse-Flux) Machine" ICEM '98 Vol. 2, 1998 Istanbul, Turkey, pp.1110-1122, and in references cited therein. The only critical requirement is that the torque direction be perpendicular to the magnetic flux lines.

The manner in which the modular design of the present invention may be utilized in order to properly size motors for a variety of configurations utilizing the same rotor/stator modules is illustrated in Figs. 8, 11 and 12. Each module comprises one phase. The motor of Figs. 1-10 has three modules 28-30, and would be operated by four phase AC power provided, for instance, by a variable voltage, variable frequency power converter (VVVF drive) of a well-known variety. Assuming that each module contributed sufficient torque to provide a 5 ton motor, the motor of Figs. 1-10 would comprise a 20 ton machine.

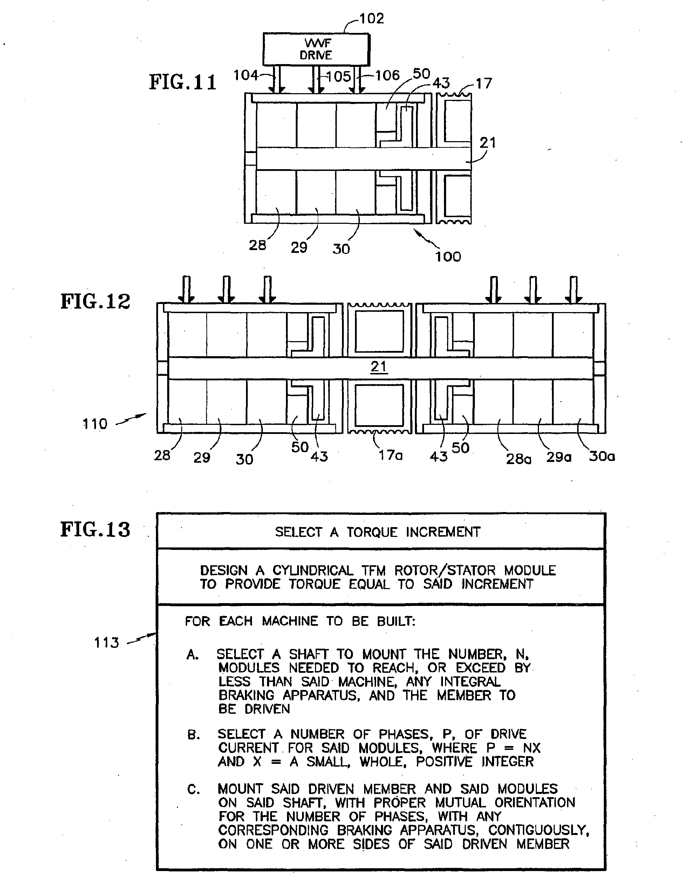

Illustrated in Fig. 11 is a three-phase, 15 ton machine 100, as described in Figs. 1-10. The VVVF drive 102 provides phase related separate drive currents over related lines 104, 105, 106 to corresponding modules 28-30. Alternatively, for complete modularity, each module may have its own, separate drive.

In Fig. 12, an elevator machine 110 may comprise six modules 28-30, 28a-30a, working on the common shaft 21; the modules could be separately driven by six different phases of AC power, or the modules 28-30 and the modules 28a-30a could be driven in parallel with the same three phases of AC power. However, six-phase power would provide smoother operation and lower losses, as is know.

Similarly, modules capable of producing more or less torque per module could be arranged with as little as a pair of modules being driven by two-phase power, or six or more phases driven by three- or six- or more-phase power. A three-phase drive, for instance, can drive a motor consisting of 3N stator modules where N may be 1-4 or some other positive small integer, where similar modules share the power from the three-phase drive.

## Claims

1. A modular rotary, transverse flux, electric machine (12), comprising:
a rotatable shaft (21);
a plurality of identical, generally cylindrical, transverse flux rotor/stator modules (28-30) disposed on said shaft, lines of flux (79) between the rotor and the stator of said modules being perpendicular to said torque, at least one of said modules being contiguous with at least one other of said modules adjacent thereto, each said module capable of contributing substantially the same rated torque to said shaft (21), the rated torque of said motor thereby equalling the rated torque of each said module times the number of said modules;
a rotatably driven member (17) disposed for rotation with said shaft (21); and
a plurality of end plates (13,14), one for each side of any of said modules (28,30) which side is not contiguous with another of said modules;
**characterized by** comprising:
a brake (49) formed integrally with said modules and disposed between one of said sides not contiguous with another of said modules and the corresponding one of said end plates (14).

2. A machine according to claim 1, wherein said brake comprises:
one or more coils (86,87) for disengaging said brake when they are energized; a brake disk (43), having friction brake pads (92,93) on each major surface thereof; disposed for rotation with said shaft and axially slidable (46,47) on said shaft;
a frame (50) having an annular groove for said one or more coils and keyed (84) to a stationary part (60) of said machine so as to not rotate, but slide axially (83);
and at least one spring (53) to force said frame toward said end plate in the absence of said one or more coils being energized, thereby causing one of said pads to engage said end plate and the other of said pads to engage said frame, thereby providing braking torque.

3. A family of modular, transverse flux, rotary electric machines, each machine (12) as claimed in claim 1 or 2, wherein:
each of said machines includes at least one brake (49) formed compatibly with said modules and disposed between one of said sides not contiguous with another of said modules and the corresponding one of said end plates (14);
at least one of said machines has a different number of said modules than at least one other of said machines; and
the length of said shaft is selected to accommodate at least said number of said modules, said brake, and said driven member.

4. A family of modular, transverse flux, rotary electric machines, each machine (12) as claimed in claim 1 or 2, wherein:
at least one of said machines has a different number of said modules than at least one other of said machines; and
the length of said shaft is selected to accommodate at least said number of said modules and said driven member, said modules mounted on one or more sides of said driven member.

5. A family of machines according to claim 4, wherein at least one of said machines has all of said modules disposed only on one side of said driven member.

6. A family of machines according to claim, 4 wherein at least one of said machines has at least one module disposed on each side of said driven element.

7. A method of providing a family of modular rotary electric machines (12), **characterized by**:
(a) selecting a torque increment;
(b) designing a cylindrical transverse flux rotor/stator module (28-30) to provide torque equal to said increment, lines of flux (79) between the rotor and the stator of said module being perpendicular to an axis of said module;
(c) for each machine to be built:
(i) selecting a shaft (21) to mount the number, N, of modules needed to reach, or exceed by less than said increment, the torque required for said machine and a member (17) to be driven;
(ii) mounting said member (17) to be driven on said shaft (21), and mounting said modules (28-30) on said shaft (21) contiguously, said modules (28-30) mounted on one or more sides of said driven member (17);
(d) designing at least one of said machines to have a number of modules (28-30) different from the number of modules (28-30) in at least one other of said machines; and
(e) disposing a brake (49) integrally with said modules on the same shaft (21) and contiguous to one of the modules (28-30).

8. A method according to claim 7 further comprising:
designing a brake module (49) having a generally cylindrical configuration of diameter no greater than that of said modules (38,40); and
mounting a brake member on said shaft (21) contiguously with one of said modules (30).

9. A method according to claim 7 further comprising:
selecting a number of phases, P, of drive current for said modules, where P = NX and X = a small, whole, positive integer; and
said step (ii) comprises mounting said modules with proper mutual orientation for said number of phases.

## Patentansprüche

1. Modulare elektrische Querflussmaschine (12), umfassend:
eine drehbare Welle (21);
eine Mehrzahl identischer, allgemein zylindrischer Querflussrotor-/-statormodule (28-30), die an der Welle angeordnet sind, wobei Flusslinien (79) zwischen dem Rotor und dem Stator der Module senkrecht zum Drehmoment sind, wobei wenigstens eins der Module an wenigstens ein anderes, zu ihm benachbarten der Module angrenzt, wobei jedes Modul im Wesentlichen dasselbe Nenndrehmoment auf die Welle (21) ausüben kann, wobei das Nenndrehmoment des Motors damit dem Nenndrehmoment der einzelnen Module mal der Anzahl der Module entspricht;
ein drehbar angetriebenes Element (17), das zur Drehung mit der Welle (21) angeordnet ist; und
eine Mehrzahl von Platten (13, 14), eine für jede Seite von einem beliebigen der Module (28, 30), dessen Seite nicht an ein anderes der Module angrenzt;
**dadurch gekennzeichnet, dass** sie Folgendes umfasst:
eine Bremse (49), die einstückig mit den Modulen gebildet ist und zwischen einer der Seiten, die nicht an ein anderes der Module angrenzt, und der entsprechenden der Endplatten (14) angeordnet ist.

2. Maschine nach Anspruch 1, wobei die Bremse Folgendes umfasst:
eine oder mehrere Spulen (86, 87) zum Lösen der Bremse, wenn sie mit Strom versorgt werden; eine Bremsscheibe (43), die Reibungsbremsbeläge (92, 93) auf jeder ihrer Hauptflächen aufweist; angeordnet zur Drehung mit der Welle und axial auf der Welle verschiebbar (46, 47);
einen Rahmen (50) mit einer Ringnut für die eine oder mehreren Spulen, der mit einem stationären Teil (60) der Maschine verkeilt (84) ist, um sich nicht zu drehen, aber sich axial zu verschieben (83);
und wenigstens eine Feder (53), um den Rahmen dann, wenn keine der einen oder mehreren Spulen mit Strom versorgt wird, zur Endplatte zu schieben, wodurch einer der Beläge veranlasst wird, in Eingriff mit der Endplatte zu treten und der andere der Beläge veranlasst wird, in Eingriff mit dem Rahmen zu treten, wodurch ein Bremsmoment bereitgestellt wird.

3. Familie modularer elektrischer Querflussmaschinen, wobei jede Maschine (12) gemäß Anspruch 1 oder 2 ist, wobei:
jede der Maschinen wenigstens eine Bremse (49) aufweist, die kompatibel mit den Modulen gebildet ist und zwischen einer der Seiten, die nicht an eine anderes der Module angrenzen, und der entsprechenden der Endplatten (14) angeordnet sind;
wobei wenigstens eine der Maschinen eine andere Anzahl der Module als wenigstens eine andere der Maschinen aufweist; und
wobei die Länge der Welle dazu ausgewählt ist, wenigstens die Anzahl der Module, die Bremse und das angetriebene Element aufzunehmen.

4. Familie modularer elektrischer Querflussmaschinen, wobei jede Maschine (12) gemäß Anspruch 1 oder 2 ist, wobei:
wenigstens eine der Maschinen eine andere Anzahl der Module als wenigstens eine andere der Maschinen aufweist; und
wobei die Länge der Welle dazu ausgewählt ist, wenigstens die Anzahl der Module und das angetriebene Element aufzunehmen, wobei die Module an einer oder mehreren Seiten des angetriebenen Elements angebracht sind.

5. Familie von Maschinen nach Anspruch 4, wobei bei wenigstens einer der Maschinen alle Module auf nur einer Seite des angetriebenen Elements angeordnet sind.

6. Familie von Maschinen nach Anspruch 4, wobei bei wenigstens einer der Maschinen wenigstens ein Modul auf jeder Seite des angetriebenen Elements angeordnet ist.

7. Verfahren zum Bereitstellen einer Familie modularer elektrischer Maschinen (12), **gekennzeichnet durch**:
(a) Auswählen einer Drehmomentzunahme;
(b) Konstruieren eines zylindrischen Querflussrotor-/-statormoduls (28-30), um ein Drehmoment bereitzustellen, das dieser Zunahme entspricht, wobei Flusslinien (79) zwischen dem Rotor und dem Stator des Moduls senkrecht zu einer Achse des Moduls sind;
(c) für jede Maschine, die gebaut werden soll:
(i) Auswählen einer Welle (21) zum Anbringen einer Anzahl N von Modulen, die benötigt werden, um das Drehmoment, das für die Maschine und ein anzutreibendes Element (17) benötigt wird, zu erreichen oder um wenigstens die Zunahme zu überschreiten;
(ii) Anbringen des anzutreibenden Elements (17) an der Welle (21) und angrenzendes Anbringen der Module (28-30) an der Welle (21), wobei die Module (28-30) auf einer oder mehreren Seiten des angetriebenen Elements (17) angebracht werden;
(d) Konstruieren wenigstens einer der Maschinen derart, dass sie eine andere Anzahl von Modulen (28-30) aufweist als die Anzahl von Modulen (28-30) in wenigstens einer der Maschinen; und
(e) Anordnen einer Bremse (49) einstückig mit den Modulen auf derselben Welle (21) und angrenzend an eines der Module (28-30).

8. Verfahren nach Anspruch 7, ferner umfassend:
Konstruieren eines Bremsmoduls (49) mit einer allgemein zylindrischen Konfiguration mit einem Durchmesser, der nicht größer als der der Module (38, 40) ist; und
Anbringen eines Bremselements auf der Welle (21) angrenzend an eines der Module (30).

9. Verfahren nach Anspruch 7, ferner umfassend:
Auswählen einer Anzahl von Phasen P von Antriebsstrom für die Module, wobei P = NX und X = eine kleine, ganze, positive Ganzzahl ist; und
wobei der Schritt (ii) ein Anbringen der Module mit einer geeigneten gegenseitigen Ausrichtung für die Anzahl von Phasen umfasst.

## Revendications

1. Machine électrique (12) rotative et modulaire, à flux transversal, comprenant :
un arbre susceptible de tourner (21) ;
une pluralité de modules (28-30) identiques, globalement cylindriques, à rotor/stator à flux transversal disposés sur ledit arbre, des lignes de flux (79) entre le rotor et le stator desdits modules étant perpendiculaires audit couple, au moins un desdits modules étant contigu à au moins un autre desdits modules adjacents à celui-ci, chacun desdits modules étant à même de contribuer sensiblement au même couple nominal vis-à-vis dudit arbre (21), le couple nominal dudit moteur étant ainsi égal au couple nominal de chacun desdits modules facteur du nombre desdits modules ;
un élément à entraînement rotatif (17) disposé pour rotation avec ledit arbre (21) ; et
un ensemble de plaques d'extrémité (13, 14), une pour chaque côté de l'un quelconque desdits modules (28, 30), ce côté n'étant pas contigu avec un autre desdits modules ;
**caractérisé par** le fait de comprendre :
un frein (49) intégré auxdits modules et disposé entre l'un desdits côtés non contigus à un autre desdits modules et la plaque d'extrémité (14) correspondante de l'une desdites plaques.

2. Machine selon la revendication 1, dans laquelle ledit frein comprend :
au moins une bobine (86, 87) permettant de dégager ledit frein lorsqu'ils sont activés ; un disque de freinage (43) comportant des tampons de frottement (92, 93) sur chaque surface majeure de celui-ci ; disposé pour rotation avec ledit arbre et coulissant axialement (46, 47) sur ledit arbre ;
un cadre (50) comportant une rainure annulaire pour ladite au moins une bobine et assemblé par clavette (84) à une pièce fixe (60) de ladite machine de manière à ne pas tourner, mais à coulisser axialement (83) ;
et au moins un ressort (53) servant à forcer ledit cadre vers ladite plaque d'extrémité en l'absence d'au moins une bobine activée, ce qui amène l'un desdits tampons à venir en contact avec ladite plaque d'extrémité et l'autre desdits tampons à venir en contact avec ledit cadre, ce qui produit un couple de freinage.

3. Famille de machines électriques modulaires, à flux transversal et rotatives, chaque machine (12) étant conforme à la revendication 1 ou 2, dans laquelle :
chacune desdites machines comprend au moins un frein (49) formé de manière compatible avec lesdits modules et disposé entre l'un desdits côtés non contigu à un autre desdits modules et la plaque d'extrémité correspondante (14) desdites plaques ;
au moins une desdites machines a un nombre différent desdits modules par rapport à au moins une autre desdites machines ; et
la longueur dudit arbre est choisie pour loger au moins ledit nombre desdits modules, ledit frein et ledit élément entraîné.

4. Famille de machines électriques modulaires, à flux transversal et rotatives, chaque machine (12) étant conforme à la revendication 1 ou 2, dans laquelle :
chacune desdites machines a un nombre différent desdits modules par rapport à au moins l'une desdites machines ; et
la longueur dudit arbre est choisie pour loger au moins ledit nombre desdits modules et ledit élément entraîné, lesdits modules étant montés sur au moins un côté dudit élément entraîné.

5. Famille de machines selon la revendication 4, dans laquelle au moins une desdites machines comporte l'ensemble desdits modules disposés uniquement sur un côté dudit élément entraîné.

6. Famille de machines selon la revendication 4, dans laquelle au moins une desdites machines comporte au moins un module disposé de part et d'autre dudit élément entraîné.

7. Procédé d'obtention d'une famille de machines électriques rotatives modulaires (12), **caractérisé par** :
(a) le choix d'un incrément de couple ;
(b) la conception d'un module cylindrique (28-30) à rotor/stator à flux transversal, afin d'obtenir un couple égal audit incrément, les lignes de flux (79) entre le rotor et le stator dudit module étant perpendiculaires à un axe dudit module ;
(c) pour chaque machine à construire :
(i) le choix d'un arbre (21) pour monter le nombre N de modules nécessaires pour atteindre ou pour dépasser de moins dudit incrément le couple nécessaire pour ladite machine et pour un élément (17) à entraîner ;
(ii) le montage dudit élément (17) à entraîner sur ledit arbre (21) et le montage desdits modules (28-30) sur ledit arbre (21) de manière contiguë, lesdits modules (28-30) étant montés sur au moins un côté dudit élément entraîné (17) ;
(d) la conception d'au moins une desdites machines pour qu'elle ait un nombre de modules (28-30) différent du nombre de modules (28-30) dans au moins une autre desdites machines ; et
(e) la disposition d'un frein (49) intégré auxdits modules sur le même arbre (21) et contigu à l'un des modules (28-30).

8. Procédé selon la revendication 7, comprenant en outre :
la conception d'un module de frein (49) présentant une configuration globalement cylindrique de diamètre inférieur à celui desdits modules (38, 40) ; et
le montage d'un élément de frein sur ledit arbre (21) de manière contiguë avec l'un desdits modules (30).

9. Procédé selon la revendication 7, comprenant en outre :
le choix d'un nombre de phases P de courant d'entraînement pour lesdits modules, où P = NX et où X représente un petit nombre entier positif ; et
ladite étape (ii) comprend le montage desdits modules avec orientation mutuelle propre pour ledit nombre de phases.
